# EUROPEAN PATENT SPECIFICATION

(11) **EP 4 344 038 B1**
(45) Date of publication and mention of the grant of the patent: **08.07.2026**
(21) Application number: 22197056.9
(22) Date of filing: 22.09.2022
(51) Int. Cl.: H02M 3/00, H02M 3/335, H02M 1/00, H02M 1/14, H05B 45/38

(54) **LLC CONVERTER WITH SYNCHRONOUS RECTIFICATION**
LLC-WANDLER MIT SYNCHRONGLEICHRICHTUNG
CONVERTISSEUR LLC À REDRESSEMENT SYNCHRONE

(43) Date of publication of application: 27.03.2024
(73) Proprietor: Tridonic GmbH & Co. KG, 6851 Dornbirn (AT)
(72) Inventor: Walch, Patrick, 6850 Dornbirn (AT); Egle, Manuel, 6850 Dornbirn (AT); Nachbaur, Stefan, 6850 Dornbirn (AT)
(74) Representative: Rupp, Christian

(56) References cited:
- EP-A1- 3 754 829
- WO-A1-2019/113784
- CN-A- 106 712 529
- YEON CHEOL-O ET AL: "Digital implementation of optimal SR ON-time control and asymmetric duty control in LLC resonant converter", 2015 9TH INTERNATIONAL CONFERENCE ON POWER ELECTRONICS AND ECCE ASIA (ICPE-ECCE ASIA), KOREAN INSTITUTE OF POWER ELECTRONICS, 1 June 2015 (2015-06-01), pages 2031 - 2037, XP033184399, [retrieved on 20150727], DOI: 10.1109/ICPE.2015.7168057

## Description

The invention relates to an LLC converter with synchronous rectification.

Generally, in times of an increasing use of LED (light-emitting diode) lighting means in many different areas of life, there is a growing need of an LLC converter with synchronous rectification for LED lighting means, and a system comprising such an LLC converter with synchronous rectification and LED lighting means in order to ensure an efficient and reliable supply of said LED lighting means.

However, there are no LLC converters with synchronous rectification allowing for reducing an asymmetry in the sense of an asymmetric duty cycle distribution between switches of the corresponding rectification stage especially in order to ensure a particularly efficient and reliable supply.

According to Yeon Cheol-O et al. in "Digital implementation of optimal SR ON-time control and asymmetric duty control in LLC resonant converter", 2015 9th international conference on power electronics and ECCE Asia (ICPE-ECCE ASIA), Korean Institute Of Power Electronics, 1 June 2015 (2015-06-01), pages 2031 - 2037, XP033184399, DOI: 10.1109/ICPE 2015.7168057 [retrieved on 2015-07-27] a LLC converter with synchronous rectification by comparison of voltages is described having a half bridge rectification stage and control means to control operation switches by voltage signals.

Document WO 2019/113784 A1 describes resonant converter power supplies and control methods for reducing unbalanced currents in resonant power supplies using measurements and balancing of secondary currents by adapting duty cycles of a half bridge rectification stage there.

The European patent application EP 3 754 829 A1 describes an LLC circuit with a half bridge rectifier with switches and a transformer used in connection with an LED driver.

Accordingly, there is the object to provide an LLC converter with synchronous rectification for LED lighting means, and a system comprising such an LLC converter with synchronous rectification and LED lighting means, thereby ensuring a high efficiency and reliability.

This object is solved by the features of claim 1 for an LLC converter with synchronous rectification for LED lighting means and the features of claim 15 for a system comprising such an LLC converter with synchronous rectification and LED lighting means. The dependent claims contain further developments.

According to a first aspect of the invention, an LLC converter with synchronous rectification for LED lighting means is provided. Said LLC converter comprises a half-bridge, a resonant tank comprising a transformer with a primary side and a secondary side, a rectification stage, and control means. In this context, the half-bridge is configured to supply said primary side. Additionally, the secondary side is configured to supply said rectification stage. In further addition to this, the control means are configured to control the operation of switches of the half-bridge and to be supplied with at least one feedback signal indicating the respective switching on-time periods of switches of the rectification stage. Advantageously, this allows for reducing an asymmetry in the sense of an asymmetric duty cycle distribution between the switches of the rectification stage, thereby ensuring a particularly efficient and reliable supply.

It is noted that the switch, which due to the asymmetry, which carries a much smaller current, can encounter an erroneous switching behavior such small current is difficult to be discriminated from current pulses from noise or the like, such that, for example, an erroneous double switching within one period may occur, which leads to undesired effects even in the light output of connected lighting means. Inventively, as a further advantage, such an erroneous switching behavior is efficiently and reliably prevented. Further advantageously, a correct synchronous rectification can even be guaranteed at low power levels.

According to a first preferred implementation form of the first aspect of the invention, the switches of the half-bridge comprise a high-side switch, preferably a first transistor, more preferably a first field-effect transistor, and a low-side switch, preferably a second transistor, more preferably a second field-effect transistor. Advantageously, for instance, complexity can be reduced, thereby increasing efficiency.

According to a second preferred implementation form of the first aspect of the invention, the switches of the rectification stage comprise a first switch, preferably a third transistor, more preferably a third field-effect transistor, and a second switch, preferably a fourth transistor, more preferably a fourth field-effect transistor. Advantageously, for example, simplicity, and thus also cost-efficiency, can be increased.

According to a further preferred implementation form of the first aspect of the invention, the switches of the rectification stage are switched in dependence from the respective voltage provided at the secondary side. Advantageously, for instance, this allows for a cost-efficient implementation. In this context, further advantageously, the switches can be implemented as field-effect transistors, wherein the respective gate terminal and the respective drain terminals are connected to a control unit and/or to the control means.

According to a further preferred implementation form of the first aspect of the invention, the control means comprise a primary side control unit and a secondary side control unit being coupled to said primary side control unit preferably via a galvanic decoupling element. Advantageously, for example, the primary side and the secondary side can galvanically be separated in a full manner.

According to a further preferred implementation form of the first aspect of the invention, the galvanic decoupling element comprises or is a photocoupler. Advantageously, for instance, galvanic separation can be achieved in a cost-efficient manner.

According to a further preferred implementation form of the first aspect of the invention, the primary side control unit comprises or is a primary side application-specific integrated circuit. In addition to this or as an alternative, the secondary side control unit comprises or is a secondary side application-specific integrated circuit. Advantageously, for example, efficiency and reliability can further be increased.

According to a further preferred implementation form of the first aspect of the invention, the control means are configured to detect an asymmetric duty cycle distribution between the switches of the rectification stage on the basis of the at least one feedback signal. Advantageously, for instance, an asymmetry detection can be achieved in a simple and efficient manner. In this context, further advantageously, the switches can be implemented as field-effect transistors, wherein the respective gate voltages are measured especially by the control means.

According to a further preferred implementation form of the first aspect of the invention, the control means are configured to control the operation of the switches of the half-bridge in the sense of an adaption of the respective duty cycles of the switches of the half-bridge. Advantageously, for example, a dynamic duty cycle adaption especially to balance unsymmetrical current shapes can be achieved in an efficient and reliable manner. In this context, further advantageously, the switches can be implemented as field-effect transistors, wherein the respective gate voltages are controlled especially by the control means.

According to a further preferred implementation form of the first aspect of the invention, the control means are configured to reduce an asymmetry with respect to the asymmetric duty cycle distribution with the aid of the adaption of the respective duty cycles of the switches of the half-bridge. Advantageously, for instance, unsymmetrical current shapes can easily be balanced.

According to a further preferred implementation form of the first aspect of the invention, the secondary side control unit is configured to compare the respective switching on-time periods of the switches of the rectification stage. Advantageously, for example, a different gate timing can efficiently be detected especially in the case that the switches are implemented as field-effect transistors comprising respective gate terminals.

According to a further preferred implementation form of the first aspect of the invention, the secondary side control unit is configured to send a trigger signal to the primary side control unit preferably via the galvanic decoupling element if the respective switching on-time periods of the switches of the rectification stage are different with respect to each other. Advantageously, for instance, the primary side control unit can efficiently and reliably be triggered especially to calculate and/or set a duty correction.

According to a further preferred implementation form of the first aspect of the invention, the primary side control unit is configured to calculate at least one duty cycle correction with respect to the respective duty cycles of the switches of the half-bridge. Advantageously, for example, such a duty cycle correction efficiently allows for a dynamic duty cycle adaption.

According to a further preferred implementation form of the first aspect of the invention, the primary side control unit is configured to apply the at least one duty cycle correction to the respective duty cycles of the switches of the half-bridge. Advantageously, for instance, the respective gate voltages can efficiently be set in accordance with the at least one duty cycle correction especially in the case that the switches are implemented as field-effect transistors comprising respective gate terminals.

According to a second aspect of the invention, a system is provided. Said system comprises an LLC converter according to the first aspect of the invention or any of its preferred implementation forms thereof, respectively, and LED lighting means being supplied by said LLC converter. Advantageously, this allows for reducing an asymmetry in the sense of an asymmetric duty cycle distribution between the switches of the rectification stage, thereby ensuring a particularly efficient and reliable supply. Further advantageously, a correct synchronous rectification can even be guaranteed at low power levels.

Exemplary embodiments of the invention are now further explained with respect to the drawings by way of example only, and not for limitation. In the drawings:
- Fig. 1: shows an exemplary embodiment of the first aspect of the invention in combination with the second aspect of the invention;
- Fig. 2: illustrates inventive dynamic duty cycle adaption with the aid of different time diagrams;
- Fig. 3: shows a further exemplary embodiment of the first aspect of the invention; and
- Fig. 4: shows a part of Fig. 3 in greater detail.

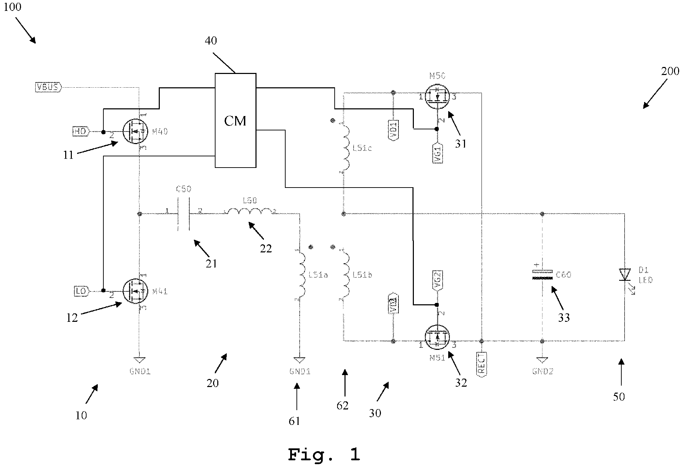

Firstly, Fig. 1 illustrates an exemplary embodiment of an LLC converter 100 with synchronous rectification for LED lighting means 50.

In addition to this, it is noted that said Fig. 1 also depicts an exemplary embodiment of the inventive system 200 comprising the above-mentioned LLC converter 100 and the above-mentioned LED lighting means 50 being supplied by said LLC converter 100.

In accordance with Fig. 1, the LLC converter 100 comprises a half-bridge 10, a resonant tank 20 comprising a transformer with a primary side 61 and a secondary side 62, a rectification stage 30, and control means 40.

In this context, the half-bridge 10 is configured to supply said primary side 61. Additionally, the secondary side 62 is configured to supply said rectification stage 30. In further addition to this, the control means 40 are configured to control the operation of switches 11, 12 of the half-bridge 10 and to be supplied with at least one feedback signal indicating the respective switching on-time periods of switches 31, 32 of the rectification stage 30.

With respect to said switches 11, 12 of the half-bridge 10, it is noted that the switches 11, 12 comprise a high-side switch, exemplarily a first field-effect transistor 11, and a low-side switch, exemplarily a second field-effect transistor 12.

In this exemplary case, said field-effect transistors 11, 12 are of an n-channel enhancement type.

With respect of the above-mentioned switches 31, 32 of the rectification stage 30, it is noted that said switches 31, 32 comprise a first switch, exemplarily a third field-effect transistor 31, and a second switch, exemplarily a fourth field-effect transistor 32.

In this exemplary case, said field-effect transistors 31, 32 are of an n-channel enhancement type.

With respect to the switches or the transistors 31, 32, respectively, it is noted that the switches 31, 32 of the rectification stage 30 are switched in dependence from the respective voltage provided at the secondary side.

In this context, the LLC converter 100 may further comprise an additional control unit, wherein a first terminal, exemplarily a drain terminal, of the third transistor 31, a second terminal, exemplarily a gate terminal, of said third transistor 31, a first terminal, exemplarily a drain terminal, of the fourth transistor 32, and a second terminal, exemplarily a gate terminal, of said fourth transistor 32 are connected to said additional control unit. Additionally or alternatively, the each of the foregoing terminals can be connected to the control means 40.

In this respect, it is further noted that the third transistor 31 may especially be turned on if a voltage at the first terminal, exemplarily a drain voltage, of said third transistor 31 falls below a specific turn-on threshold, for instance, -265 mV, and turned off if said voltage at the first terminal, exemplarily said drain voltage, of the third transistor 31 rises above a specific turn-off threshold, for example, 10.5 mV. Such a switching behavior may analogously apply to fourth transistor 32. Said switching regarding the third transistor 31 or the fourth transistors 32, respectively, can be controlled by the above-mentioned additional control unit and/or the control means 40.

Furthermore, the control means 40 are configured to detect an asymmetric duty cycle distribution between the switches 31, 32 of the rectification stage 30 on the basis of the at least one feedback signal, exemplarily two feedback signals.

Accordingly, as it can further be seen from Fig. 1, the second terminal, exemplarily the gate terminal, of the third transistor 31, and the second terminal, exemplarily the gate terminal, of the fourth transistor 32 are connected to the control means 40. In other words, each of the above-mentioned two feedback signals is a respective gate voltage signal with respect to the field-effect transistors 31, 32 of the rectification stage 30.

Moreover, the control means 40 are configured to control the operation of the switches 11, 12 of the half-bridge 10 in the sense of an adaption of the respective duty cycles of the switches 11, 12 of the half-bridge.

Accordingly, a second terminal, exemplarily a gate terminal, of the first transistor 11, and a second terminal, exemplarily a gate terminal, of the second transistor 12 are connected to the control means 40.

In this context, the control means 40 may preferably be configured to reduce an asymmetry with respect to the asymmetric duty cycle distribution with the aid of the adaption of the respective duty cycles of the switches of the half-bridge.

With respect to the first field-effect transistor 11, it is noted that a first terminal, exemplarily a drain terminal, of said first transistor 11 is connected to a voltage potential, exemplarily a supply voltage, whereas a third terminal, exemplarily a source terminal, of the first transistor 11 is connected to a first terminal, exemplarily a drain terminal, of the second transistor 12. Additionally, a third terminal, exemplarily a source terminal, of said second transistor 12 is connected to another voltage potential, exemplarily ground.

Furthermore, the above-mentioned first terminal, exemplarily the drain terminal, of the second transistor 12 is connected to a first terminal of capacitance 21, whereas a second terminal of said capacitance 21 is connected to a first terminal of an inductance 22.

In addition to this, a second terminal of said inductance 22 is connected to a first terminal of a corresponding inductance of the primary side 61, whereas a second terminal of said corresponding inductance of the primary side 61 is connected to a voltage potential, exemplarily ground.

Moreover, the first terminal, exemplarily the drain terminal, of the third transistor 31 is connected to a first terminal of a corresponding inductance of the secondary side 62, whereas the first terminal, exemplarily the drain terminal, of the fourth transistor 32 is connected to a second terminal of said corresponding inductance of the secondary side 62.

As it can further be seen from Fig. 1, an intermediate tap, especially a center tap, of the corresponding inductance of the secondary side 62 is connected to a first terminal of a capacitance, exemplarily an electrolytic capacitor 33, and a first terminal of the LED lighting means 50, whereas a second terminal of said capacitance, exemplarily said electrolytic capacitor 33, and a second terminal of the LED lighting means 50 are connected to a third terminal, exemplarily a source terminal, of the third transistors 31, a third terminal, exemplarily a source terminal, of the fourth transistor 32, and a voltage potential, exemplarily ground or another ground.

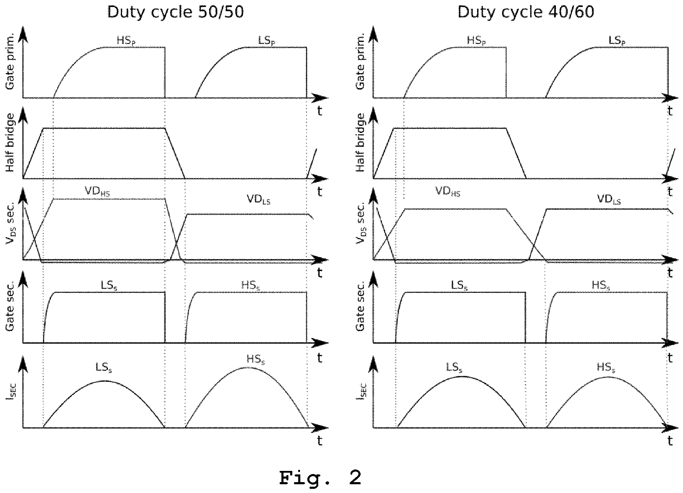

Now, in accordance with Fig. 2, different time diagrams regarding voltage or current, respectively, are depicted with respect to the respective gate terminals of the transistors of the half-bridge, such as the transistors 11, 12, the half-bridge, such as the half-bridge 10, the respective drain and source terminals of the transistors of the rectification stage, such as the transistors 31, 32, and the respective gate terminals of said transistors of said rectification stage in the context of an exemplary 50/50-duty cycle on the left hand of Fig. 2 and an exemplary 40/60-duty cycle on the right hand with regard to the switches of the half-bridge, such as the switches 11, 12 of the half-bridge 10.

With the aid of said different time diagrams according to Fig. 2, the inventive dynamic duty cycle adaption is illustrated. Said dynamic duty cycle adaption especially allows for balancing unsymmetrical current shapes. In the context of Fig. 2, it is noted that it can be seen that the exemplary duty cycle, especially an initial duty cycle, of 50/50 leads to unilateral secondary currents, whereas on the right side of Fig. 2, the duty cycle is exemplarily adapted to 40/60 which leads to a similar current distribution.

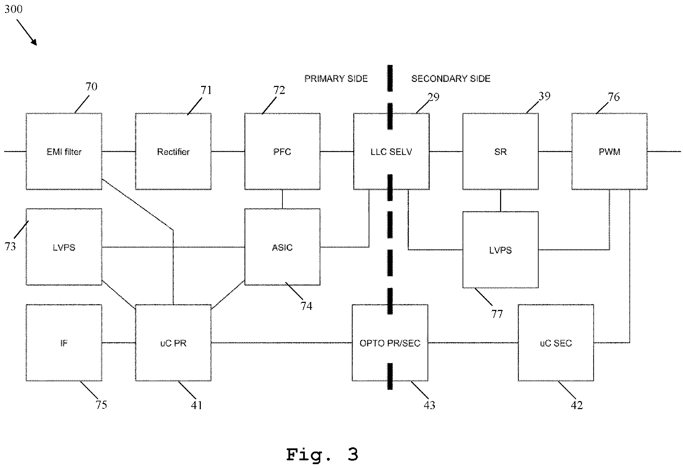

Furthermore, Fig. 3 shows a further exemplary embodiment 300 of the inventive LLC converter with synchronous rectification.

Said embodiment 300, exemplarily a primary side thereof, comprises an electromagnetic interference (EMI) filter 70, a rectifier 71, a power factor correction (PFC) unit 72, a low voltage power supply (LVPS) 73, an application-specific integrated circuit (ASIC) 74, an intermediate frequency (IF) unit 75, and a primary side control unit 41, exemplarily a primary side microcontroller.

In addition to this, the embodiment 300, exemplarily a secondary side thereof, comprises a synchronous rectifier 39, a pulse-width modulation (PWM) unit 76, a low voltage power supply (LVPS) 77, especially a further LVPS, and a secondary side control unit 42, exemplarily a secondary side microcontroller.

As it can further be seen from Fig. 3, the primary side control unit 41 is coupled to the secondary side control unit 42 via a galvanic decoupling element, exemplarily an opto-coupler 43 or photocoupler, respectively.

It is noted that the above-mentioned control means 40 of Fig. 1 may comprise such a primary side control unit 41 and such a secondary side control unit 42 being coupled to said primary side control unit 41 preferably via a galvanic decoupling element, such as the photocoupler 43.

Furthermore, the secondary side control unit 42 can be configured to compare the respective switching on-time periods of the switches of the rectification stage, such as the switches 31, 32 of the rectification stage 30 of Fig. **1****.**

Moreover, it might be particularly advantageous if the secondary side control unit 42 is configured to send a trigger signal to the primary side control unit 41 preferably via the galvanic decoupling element 43 if the respective switching on-time periods of the switches of the rectification stage are different with respect to each other.

It is further noted that the primary side control unit 41 can be configured to calculate at least one duty cycle correction with respect to the respective duty cycles of the switches of the half-bridge, such as the switches 11, 12 of the half-bridge 10 of Fig. 1.

In this context, it might be particularly advantageous if the primary side control unit 41 is configured to apply the at least one duty cycle correction to the respective duty cycles of the switches of the half-bridge.

As it can further be seen from Fig. 3, the primary side is exemplarily coupled to the secondary side via an LLC safety extra-low voltage (SELV) unit 29.

In this context, the PFC unit 72 and the ASIC 74 being connected to said PFC unit 72 are connected to the LLC SELV unit 29, whereas the synchronous rectifier 39 being connected to the LVPS 77 and said LVPS 77 are also connected to the LLC SELV unit 29.

With respect to the ASIC 74, it is noted that said ASIC 74 is further connected to the LVPS 73 and the primary side control unit 41. Additionally, said primary side control unit 41 is further connected to the IF unit 75, the LVPS 73, and the EMI filter 70. Said EMI filter 70 is further connected to the rectifier 71 being connected to the PFC unit 72.

Furthermore, with respect to the secondary side control unit 42, it is noted that said secondary side control unit 42 is further connected to the PWM unit 76 to which LED lighting means, such as the LED lighting means 50 of Fig. 1, can be connected. In addition to this, said PWM unit 76 is further connected to the synchronous rectifier 39 and the LVPS 77.

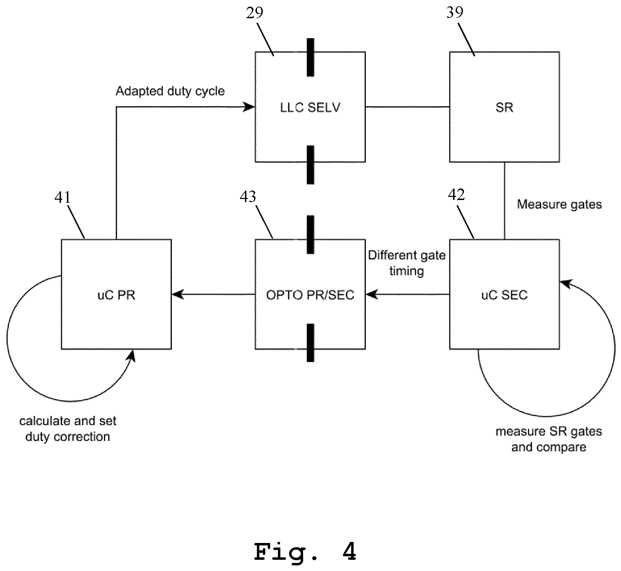

Finally, Fig. 4 depicts a part of the embodiment 300 of Fig. 3 especially to illustrate an exemplary functionality of the inventive duty cycle adaption.

In accordance with Fig. 4, the secondary side control unit 42 is configured to measure the respective gates, especially gate voltages, of the field-effect transistors of the synchronous rectifier 39, such as the transistors 31, 32 of the rectification stage 30 according to Fig. 1. Said measurement is preferably performed in a repetitive manner. Moreover, the secondary side control unit 42 is further configured to pass a different gate timing, especially if present, to the primary side control unit 41 through the galvanic decoupling element 43.

Furthermore, the primary side control unit 41 is configured to calculate and/or set a corresponding duty correction or duty cycle correction, respectively, preferably in a repetitive manner, and to provide an adapted duty cycle for the LLC SELV unit 29 or in the exemplary case of Fig. 1, for the switches 11, 12 of the half-bridge 10.

While various embodiments of the present invention have been described above, it should be understood that they have been presented by way of example only, and not limitation. Numerous changes to the disclosed embodiments can be made in accordance with the disclosure herein. Thus, the breadth and scope of the present invention should not be limited by any of the above described embodiments. Rather, the scope of the invention should be defined in accordance with the following claims and

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. An LLC converter (100, 300) with synchronous rectification for LED lighting means (50), the LLC converter (100) comprising:
a half-bridge (10),
a resonant tank (20) comprising a transformer with a primary side (61) and a secondary side (62),
a rectification stage (30) having at least two switches (31, 32) , and
control means (40),
wherein the half-bridge (10) is configured to supply said primary side (61),
wherein the secondary side (62) is configured to supply said rectification stage (30), and
wherein the control means (40) are configured to control the operation of switches (11, 12) of the half-bridge (10) and is supplied with at least one feedback signal indicating operation parameters,
**characterised in that** the at least one feedback signal is at least the respective switching on-time periods of each of said switches (31, 32) of the rectification stage (30).

2. The LLC converter (100, 300) according to claim 1,
wherein the switches (11, 12) of the half-bridge (10) comprise a high-side switch (11), preferably a first transistor, more preferably a first field-effect transistor, and a low-side switch (12), preferably a second transistor, more preferably a second field-effect transistor.

3. The LLC converter (100, 300) according to claim 1 or 2, wherein the switches (31, 32) of the rectification stage (30) comprise a first switch (31), preferably a third transistor, more preferably a third field-effect transistor, and a second switch (32), preferably a fourth transistor, more preferably a fourth field-effect transistor.

4. The LLC converter (100, 300) according to any of the claims 1 to 3,
wherein the switches (31, 32) of the rectification stage (30) are switched in dependence from the respective voltage provided at the secondary side (62).

5. The LLC converter (100, 300) according to any of the claims 1 to 4,
wherein the control means (40) comprise a primary side control unit (41) and a secondary side control unit (42) being coupled to said primary side control unit (41) preferably via a galvanic decoupling element (43).

6. The LLC converter (100, 300) according to claim 5,
wherein the galvanic decoupling element (43) comprises or is a photocoupler.

7. The LLC converter (100, 300) according to claim 5 or 6,
wherein the primary side control unit (41) comprises or is a primary side application-specific integrated circuit, and/or
wherein the secondary side control unit (42) comprises or is a secondary side application-specific integrated circuit.

8. The LLC converter (100, 300) according to any of the claims 1 to 7,
wherein the control means (40) are configured to detect an asymmetric duty cycle distribution between the switches (31, 32) of the rectification stage (30) on the basis of the at least one feedback signal.

9. The LLC converter (100, 300) according to any of the claims 1 to 8,
wherein the control means (40) are configured to control the operation of the switches (11, 12) of the half-bridge (10) in the sense of an adaption of the respective duty cycles of the switches (11, 12) of the half-bridge (10).

10. The LLC converter (100, 300) according to claim 8 and 9,
wherein the control means (40) are configured to reduce an asymmetry with respect to the asymmetric duty cycle distribution with the aid of the adaption of the respective duty cycles of the switches (11, 12) of the half-bridge (10).

11. The LLC converter (100, 300) according to any of the claims 5 to 10,
wherein the secondary side control unit (42) is configured to compare the respective switching on-time periods of the switches (31, 32) of the rectification stage (30).

12. The LLC converter (100, 300) according to claim 11,
wherein the secondary side control unit (42) is configured to send a trigger signal to the primary side control unit (41) preferably via the galvanic decoupling element (43) if the respective switching on-time periods of the switches (31, 32) of the rectification stage (30) are different with respect to each other.

13. The LLC converter (100, 300) according to claim 12,
wherein the primary side control unit (41) is configured to calculate at least one duty cycle correction with respect to the respective duty cycles of the switches (11, 12) of the half-bridge (10).

14. The LLC converter (100, 300) according to claim 13,
wherein the primary side control unit (41) is configured to apply the at least one duty cycle correction to the respective duty cycles of the switches (11, 12) of the half-bridge (10).

15. A system (200) comprising:
an LLC converter (100, 300) according to any of the claims 1 to 14, and
LED lighting means (50) being supplied by said LLC converter (100, 300).

## Patentansprüche

1. Ein LLC-Wandler (100, 300) mit synchroner Gleichrichtung für LED-Leuchtmittel (50), umfassend:
∘ eine Halbbrücke (10);
∘ einen Resonanzkreis (20) mit einem Transformator, der eine Primärseite (61) und eine Sekundärseite (62) umfasst;
∘ eine Gleichrichterstufe (30) mit mindestens zwei Schaltern (31, 32); und
∘ Steuermittel (40);
wobei die Halbbrücke (10) dazu eingerichtet ist, die Primärseite (61) zu versorgen;
wobei die Sekundärseite (62) dazu eingerichtet ist, die Gleichrichterstufe (30) zu versorgen; und
wobei die Steuermittel (40) dazu eingerichtet sind, den Betrieb der Schalter (11, 12) der Halbbrücke (10) zu steuern und mit mindestens einem Rückkopplungssignal versorgt zu werden, das Betriebsparameter angibt,
**dadurch gekennzeichnet, dass** das mindestens eine Rückkopplungssignal mindestens die jeweilige Einschaltdauer jedes der genannten Schalter (31, 32) der Gleichrichterstufe (30) angibt.

2. Der LLC-Wandler (100, 300) nach Anspruch 1, wobei die Schalter (11, 12) der Halbbrücke (10) einen High-Side-Schalter (11) umfassen, vorzugsweise einen ersten Transistor, weiter vorzugsweise einen ersten Feldeffekttransistor, und einen Low-Side-Schalter (12), vorzugsweise einen zweiten Transistor, weiter vorzugsweise einen zweiten Feldeffekttransistor.

3. Der LLC-Wandler (100, 300) nach Anspruch 1 oder 2, wobei die Schalter (31, 32) der Gleichrichterstufe (30) einen ersten Schalter (31) umfassen, vorzugsweise einen dritten Transistor, weiter vorzugsweise einen dritten Feldeffekttransistor, und einen zweiten Schalter (32), vorzugsweise einen vierten Transistor, weiter vorzugsweise einen vierten Feldeffekttransistor.

4. Der LLC-Wandler (100, 300) nach einem der Ansprüche 1 bis 3, wobei die Schalter (31, 32) der Gleichrichterstufe (30) in Abhängigkeit von der jeweils an der Sekundärseite (62) anliegenden Spannung geschaltet sind.

5. Der LLC-Wandler (100, 300) nach einem der Ansprüche 1 bis 4, wobei die Steuermittel (40) eine Primärseiten-Steuereinheit (41) und eine Sekundärseiten-Steuereinheit (42) umfassen, wobei die Sekundärseiten-Steuereinheit (42) mit der Primärseiten-Steuereinheit (41) gekoppelt ist, vorzugsweise über ein galvanisches Entkopplungselement (43).

6. Der LLC-Wandler (100, 300) nach Anspruch 5, wobei das galvanische Entkopplungselement (43) einen Optokoppler umfasst oder bildet.

7. Der LLC-Wandler (100, 300) nach Anspruch 5 oder 6, wobei die Primärseiten-Steuereinheit (41) eine anwendungsspezifische integrierte Schaltung für die Primärseite umfasst oder ist, und/oder wobei die Sekundärseiten-Steuereinheit (42) eine anwendungsspezifische integrierte Schaltung für die Sekundärseite umfasst oder ist.

8. Der LLC-Wandler (100, 300) nach einem der Ansprüche 1 bis 7, wobei die Steuermittel (40) dazu eingerichtet sind, auf Grundlage des mindestens einen Rückkopplungssignals eine asymmetrische Verteilung der Einschaltdauern zwischen den Schaltern (31, 32) der Gleichrichterstufe (30) zu erkennen.

9. Der LLC-Wandler (100, 300) nach einem der Ansprüche 1 bis 8, wobei die Steuermittel (40) dazu eingerichtet sind, den Betrieb der Schalter (11, 12) der Halbbrücke (10) im Sinne einer Anpassung der jeweiligen Tastverhältnisse der Schalter (11, 12) der Halbbrücke (10) zu steuern.

10. Der LLC-Wandler (100, 300) nach den Ansprüchen 8 und 9, wobei die Steuermittel (40) dazu eingerichtet sind, die asymmetrische Verteilung der Einschaltdauern mit Hilfe der Anpassung der jeweiligen Tastverhältnisse der Schalter (11, 12) der Halbbrücke (10) zu reduzieren.

11. Der LLC-Wandler (100, 300) nach einem der Ansprüche 5 bis 10, wobei die Sekundärseiten-Steuereinheit (42) dazu eingerichtet ist, die jeweiligen Einschaltdauern der Schalter (31, 32) der Gleichrichterstufe (30) miteinander zu vergleichen.

12. Der LLC-Wandler (100, 300) nach Anspruch 11, wobei die Sekundärseiten-Steuereinheit (42) dazu eingerichtet ist, ein Triggersignal an die Primärseiten-Steuereinheit (41) vorzugsweise über das galvanische Entkopplungselement (43) zu senden, wenn die jeweiligen Einschaltdauern der Schalter (31, 32) der Gleichrichterstufe (30) voneinander abweichen.

13. Der LLC-Wandler (100, 300) nach Anspruch 12, wobei die Primärseiten-Steuereinheit (41) dazu eingerichtet ist, mindestens eine Korrektur des Tastverhältnisses in Bezug auf die jeweiligen Tastverhältnisse der Schalter (11, 12) der Halbbrücke (10) zu berechnen.

14. Der LLC-Wandler (100, 300) nach Anspruch 13, wobei die Primärseiten-Steuereinheit (41) dazu eingerichtet ist, die mindestens eine Korrektur des Tastverhältnisses auf die jeweiligen Tastverhältnisse der Schalter (11, 12) der Halbbrücke (10) anzuwenden.

15. Ein System (200), umfassend:
• einen LLC-Wandler (100, 300) nach einem der Ansprüche 1 bis 14; und
• LED-Leuchtmittel (50), das von dem LLC-Wandler (100, 300) versorgt wird.

## Revendications

1. Un convertisseur LLC (100, 300) à redressement synchrone pour moyens d'éclairage à LED (50), comprenant :
∘ un demi-pont (10) ;
∘ un circuit résonant (20) comprenant un transformateur doté d'un côté primaire (61) et d'un côté secondaire (62) ;
∘ un étage de redressement (30) comportant au moins deux interrupteurs (31, 32) ; et
∘ des moyens de commande (40) ;
ledit demi-pont (10) étant configuré pour alimenter ledit côté primaire (61), ledit côté secondaire (62) étant configuré pour alimenter ledit étage de redressement (30),
et lesdits moyens de commande (40) étant configurés pour commander le fonctionnement des interrupteurs (11, 12) du demi-pont (10) et pour recevoir au moins un signal de rétroaction indiquant des paramètres de fonctionnement, **caractérisé en ce que** ledit au moins un signal de rétroaction comprend au moins les durées de conduction respectives de chacun desdits interrupteurs (31, 32) de l'étage de redressement (30).

2. Le convertisseur LLC (100, 300) selon la revendication 1, dans lequel les interrupteurs (11, 12) du demi-pont (10) comprennent un interrupteur côté haut (11), de préférence un premier transistor, en particulier un premier transistor à effet de champ, et un interrupteur côté bas (12), de préférence un deuxième transistor, en particulier un deuxième transistor à effet de champ.

3. Le convertisseur LLC (100, 300) selon la revendication 1 ou 2, dans lequel les interrupteurs (31, 32) de l'étage de redressement (30) comprennent un premier interrupteur (31), de préférence un troisième transistor, en particulier un troisième transistor à effet de champ, et un deuxième interrupteur (32), de préférence un quatrième transistor, en particulier un quatrième transistor à effet de champ.

4. Le convertisseur LLC (100, 300) selon l'une quelconque des revendications 1 à 3, dans lequel les interrupteurs (31, 32) de l'étage de redressement (30) sont commutés en fonction de la tension respective appliquée au côté secondaire (62).

5. Le convertisseur LLC (100, 300) selon l'une quelconque des revendications 1 à 4, dans lequel les moyens de commande (40) comprennent une unité de commande côté primaire (41) et une unité de commande côté secondaire (42), ladite unité de commande côté secondaire (42) étant couplée à ladite unité de commande côté primaire (41), de préférence par un élément de découplage galvanique (43).

6. Le convertisseur LLC (100, 300) selon la revendication 5, dans lequel l'élément de découplage galvanique (43) comprend ou est un optocoupleur.

7. Le convertisseur LLC (100, 300) selon la revendication 5 ou 6, dans lequel l'unité de commande côté primaire (41) comprend ou est un circuit intégré spécifique à l'application pour le côté primaire, et/ou dans lequel l'unité de commande côté secondaire (42) comprend ou est un circuit intégré spécifique à l'application pour le côté secondaire.

8. Le convertisseur LLC (100, 300) selon l'une quelconque des revendications 1 à 7, dans lequel les moyens de commande (40) sont configurés pour détecter, sur la base du ou des signaux de rétroaction, une répartition asymétrique des durées de conduction entre les interrupteurs (31, 32) de l'étage de redressement (30).

9. Le convertisseur LLC (100, 300) selon l'une quelconque des revendications 1 à 8, dans lequel les moyens de commande (40) sont configurés pour commander le fonctionnement des interrupteurs (11, 12) du demi-pont (10) dans le sens d'une adaptation des rapports cycliques respectifs des interrupteurs (11, 12) du demi-pont (10).

10. Le convertisseur LLC (100, 300) selon les revendications 8 et 9, dans lequel les moyens de commande (40) sont configurés pour réduire, au moyen de l'adaptation des rapports cycliques respectifs des interrupteurs (11, 12) du demi-pont (10), ladite répartition asymétrique des durées de conduction.

11. Le convertisseur LLC (100, 300) selon l'une quelconque des revendications 5 à 10, dans lequel l'unité de commande côté secondaire (42) est configurée pour comparer entre elles les durées de conduction respectives des interrupteurs (31, 32) de l'étage de redressement (30).

12. Le convertisseur LLC (100, 300) selon la revendication 11, dans lequel l'unité de commande côté secondaire (42) est configurée pour envoyer un signal de déclenchement à l'unité de commande côté primaire (41), de préférence via ledit élément de découplage galvanique (43), si les durées de conduction respectives des interrupteurs (31, 32) de l'étage de redressement (30) diffèrent l'une de l'autre.

13. Le convertisseur LLC (100, 300) selon la revendication 12, dans lequel l'unité de commande côté primaire (41) est configurée pour calculer au moins une correction de rapport cyclique relative aux rapports cycliques respectifs des interrupteurs (11, 12) du demi-pont (10).

14. Le convertisseur LLC (100, 300) selon la revendication 13, dans lequel l'unité de commande côté primaire (41) est configurée pour appliquer la ou les corrections de rapport cyclique aux rapports cycliques respectifs des interrupteurs (11, 12) du demi-pont (10).

15. Un système (200) comprenant :
• un convertisseur LLC (100, 300) selon l'une quelconque des revendications 1 à 14 ; et
• des moyens d'éclairage à LED (50) alimentés par ledit convertisseur LLC (100, 300).
